# EUROPÄISCHE PATENTSCHRIFT

(11) **EP 1 138 396 B1**
(45) Veröffentlichungstag und Bekanntmachung des Hinweises auf die Patenterteilung: **28.12.2005**
(21) Anmeldenummer: 01108463.9
(22) Anmeldetag: 14.10.1999
(51) Int. Cl.: B05C 17/005, B01F 13/00

(54) **Vorrichtung zum Öffnen eines eine pastöse Masse beinhaltenden Schlauchbeutels**
Opener for opening a tubular bag comprising a pasty material
Dispositif pour ouvrir un sachet tubulaire contenant une matière pâteuse

(30) Priorität: 14.10.1998 DE 29818280 U
(43) Veröffentlichungstag der Anmeldung: 04.10.2001
(62) Teilanmeldung aus: 99953813.5
(73) Patentinhaber: Kettenbach GmbH & CO. KG, 35713 Eschenburg (DE)
(72) Erfinder: Bublewitz, Alexander, 35745 Herborn (DE); Suchan, Matthias, 57627 Hachenburg (DE)
(74) Vertreter: Keil, Rainer A.

(56) Entgegenhaltungen:
- DE-A- 3 823 708
- DE-C- 19 710 878
- US-A- 4 453 651
- US-A- 4 722 449
- US-A- 4 884 705
- US-A- 4 898 293

## Beschreibung

Die Erfindung betrifft eine Vorrichtung zum Öffnen eines Schlauchbeutels, in dem sich eine pastöse Masse befindet. Ferner soll mit dieser Vorrichtung auch die pastöse Masse aus dem Schlauchbeutel herausgeleitet werden.

Die pastösen Massen werden in starren Behältern bzw. Kartuschen mit verschiebbaren Bodenwänden angeboten, die mittels manuell oder motorisch vorbewegbaren Stempelelementen vorbewegt werden, um Druck auf die pastösen Massen aufzubringen, wodurch diese aus den Kartuschen bzw. Behältnissen ausgetragen werden. Zwecks Reduktion von Verpackungsmaterial ist man in den letzten Jahren in zunehmendem Maße dazu übergegangen, die pastösen Massen in Schlauchbeuteln anzubieten. Diese müssen, um die pastöse Masse auszubringen, vorzugsweise an ihren stirnseitigen Enden geöffnet werden. Dies geschieht beispielsweise mit feststehenden Anstechdornen o.dgl. Schneidelementen, die an der Stirnwand einer Aufnahmekappe angeordnet sind, welche das stirnseitige Ende eines Schlauchbeutels umgibt und einen Austragstutzen aufweist. Aus EP-A-0 787 655 ist es bekannt, in dem Stutzen der Aufnahmekappe ein Anstechröhrchen anzuordnen, das federnd in Richtung auf die Stirnfläche des stirnseitigen Endes des Schlauchbeutels vorgespannt ist. Die bisher bekannten Systeme zum selbsttätigen Öffnen von Schlauchbeuteln sind insofern verbesserungswürdig, als das Eröffnen des Schlauchbeutels stets voraussetzt, dass Druck auf den Schlauchbeutel und damit auch Druck auf die pastöse Masse in dem Schlauchbeutel ausgeübt werden muss. Damit geht der Vorgang des Öffnens des Schlauchbeutels einher mit dem Austragen der pastösen Masse.

In US-A-4 722 449 ist ein starrer Behälter beschrieben, dessen Öffnung mit einer Membran verschlossen ist. Über die Öffnung ist eine Kappe gestülpt, die einen sich zum Auslassende hin verjüngenden Auslasskanal und einen das Auslassende verschließenden Deckel aufweist. Zwischen dem Auslasskanal und der Membran ist ein Aufsteckdorn angeordnet, der von dem Auslasskanal durch Niederdrücken der Kappe durch die Membran hindurch bewegt wird.

Ein ähnlicher starrer Behälter ist in US-A-4 898 293 beschrieben. Bei diesem Behälter wird eine Verschlusskappe mit einem Anstechdorn niedergedrückt, wobei der Anstechdorn eine die Behälteröffnung verschließende Membran aufbricht.

Aus US-A-4 884 705 ist ein starrer Behälter mit einer Verschlusskappe bekannt, die einen axial bewegbaren Anstechkanal aufweist, der durch Niederdrücken eines Schraubverschlusselements durch eine die Behälteröffnung verschließenden Membran bewegt wird.

In DE-A-38 23 708 ist ein weiterer starrer Behälter beschrieben, der einen mit einer Membran verschlossenen Auslassstutzen aufweist. Der Behälter ist als Kolben-Zylindereinheit ausgeführt. Außen an dem Auslassstutzen ist ein Kupplungsteil axial verschiebbar geführt, an das eine Leitung zum Weiterleiten des Inhalts des Behälters anschließbar ist. Das Kupplungsteil weist einen Durchlasskanal auf, der ein der Membran gegenüberliegenden hohles Anstechende zum Durchdringen der Membran aufweist. Durch Bewegen des Behälters auf das Kupplungsteil oder umgekehrt wird die Membran von dem Anstechende des Durchlasskanals durchdrungen und somit der Behälter geöffnet, so dass sein Inhalt durch Ausüben von Druck durch den Kolben durch den Durchlasskanal hindurch ausgetragen wird.

Schließlich ist in DE-A-38 26 887 eine schlauchförmige Verpackung für pastöse Massen beschrieben, die von einer Aufnahmekappe aufgenommen ist, welche einen Auslassstutzen mit einem darin geführten Anstechröhrchen aufweist. Das der Verpackung abgewandte stirnseitige Ende des Anstechröhrchens ist durch ein Griffteil verschlossen, das der axialen und rotatorischen Bewegung des Anstechröhrchens innerhalb des Auslassstutzens dient. Der Auslassstutzen und das Anstechröhrchen weisen jeweils eine radiale Austrittsöffnung auf, die bei vollständig in den Auslassstutzen eingeschobenem Anstechröhrchen durch entsprechendes Verdrehen desselben miteinander fluchtend ausrichtbar sind, so dass das Material aus der Schlauchverpackung radial aus diesem sowie durch das Anstechröhrchen hindurch aus dem Auslassstutzen heraus treten kann.

Der Erfindung liegt die Aufgabe zu grunde, eine Vorrichtung zum Öffnen eines eine pastöse Masse beinhaltenden Schlauchbeutels zu schaffen, mit der sich der Schlauchbeutel öffnen lässt, ohne dass der Schlauchbeutel bzw. die pastöse Masse einem externen Druck ausgesetzt sein muss.

Zu diesem Zwecke schlägt die Erfindung eine Vorrichtung vor, die versehen ist mit den Merkmalen des Anspruchs 1. Vorteilhafte Ausgestaltungen dieser beiden Varianten sind Gegenstand der Unteransprüche.

Die erfindungsgemäße Vorrichtung ist mit einem Anstechröhrchen versehen, das in dem Austragstutzen einer Aufnahmekappe axial verschiebbar geführt ist. Durch diesen Austragstutzen gelangt bei geöffnetem Schlauchbeutel die pastöse Masse heraus, um direkt aufgetragen oder, im Falle eines Zweikomponentenmaterials, mit einer anderen Komponente der pastösen Masse vermischt zu werden. Der Austragstutzen ist an der Stirnwand der Aufnahmekappe von dieser abstehend angeordnet, wobei von der Stirnwand in zum Austragstutzen entgegengesetzter Richtung ein umlaufender Rand absteht. Auf diese Weise umgibt die Aufnahmekappe eines der beiden stirnseitigen Enden des Schlauchbeutels, dessen Stirnfläche an der Stirnwand der Aufnahmekappe in einer von dieser gebildeten Anlagefläche anliegt. Das Anstechröhrchen der erfindungsgemäßen Vorrichtung ist manuell aus einer Rückzugsposition in eine Vorschubposition verschiebbar. Diese Verschiebung kann entweder direkt manuell erfolgen, indem das Anstechröhrchen von Hand innerhalb des Stutzens verschoben wird, oder aber indirekt erfolgen, indem ein Betätigungselement manuell bewegt wird, das wiederum über eine Anlagefläche an dem Anstechröhrchen anliegt und damit bei eigener Bewegung das Anstechröhrchen mitbewegt. In beiden Fällen lässt sich das Anstechröhrchen aus der Rückzugsposition, in der es nicht über die von der Stirnwand gebildeten Anlageebene der Aufnahmekappe übersteht, in die Vorschubposition verschieben, in der es über die Anlageebene übersteht und damit bei von der Aufnahmekappe aufgenommenem Folienschlauchbeutel in dessen Stirnfläche eintaucht und den Schlauchbeutel eröffnet. Das Anstechröhrchen kann werksseitig in den Stutzen eingebracht sein und befindet sich somit in seiner Rückzugsposition. Alternativ dazu ist es möglich, dass das Anstechröhrchen von dem Benutzer in den Stutzen eingeführt wird. In beiden Fällen ist es zweckmäßig, wenn das Anstechröhrchen in seiner Rückzugsposition durch eine Verrastung o.dgl. gegen ein unbeabsichtigtes Bewegen aus der Rückzugsposition heraus gesichert ist. Dies ist vorteilhaft für den Anwender, für den sich damit die Rückzugsposition taktil als eine definierte Position des Anstechröhrchens darstellt.

Der Vorteil der erfindungsgemäßen Öffnungsvorrichtung besteht darin, dass der Vorgang des Öffnens des Schlauchbeutels von dem Vorgang des Austragens der pastösen Masse aus dem Schlauchbeutel getrennt ist. Damit steht der Schlauchbeutel beim Öffnen nicht mehr unter einem erhöhten Druck, so dass versehentlich beim Öffnen auch keine pastöse Masse mehr aus dem Schlauchbeutel austreten kann. Dies vereinfacht die Handhabung der Schlauchbeutel.

Die erfindungsgemäße Vorrichtung lässt sich sowohl bei Aufnahmekappen für einen einzigen Schlauchbeutel als auch bei kombinierten Aufnahmekappen für mehrere, beispielsweise zwei Schlauchbeutel, einsetzen. Im letztgenannten Fall weist die Aufnahmekappe mehrere Austragstutzen auf, die jeweils mit einem Anstechröhrchen versehen sind. Diese Anstechröhrchen können untereinander verbunden sein, um sie gemeinsam in die jeweiligen Schlauchbeutel hineinzutreiben. Es ist aber durchaus auch möglich, dass die Anstechröhrchen untereinander nicht verbunden sind, so dass jeder Schlauchbeutel separat "angestochen" werden kann.

Besonders einfach ist es, wenn das Anstechröhrchen in seiner Rückzugsposition über das der Stirnwand der Aufnahmekappe abgewandten Austragende übersteht. Dann nämlich lässt sich die Axialverschiebung des Anstechröhrchens durch einfaches Hineinbewegen in den Stutzen realisieren. Sobald das Anstechröhrchen vollständig in den Stutzen hineinbewegt worden ist, ist die Vorschubposition erreicht und das Anstechröhrchen in den Schlauchbeutel hineingetrieben.

Zweckmäßigerweise ist das Anstechröhrchen sowohl in seiner Vorschubposition gegen unbeabsichtigte Zurückbewegungen in Richtung auf die Rückzugsposition als auch in seiner Rückzugsposition gegen ungewollte Bewegungen in die Vorschubposition gesichert. Dies kann, wie weiter oben schon erwähnt, durch eine Verrastung des Anstechröhrchens in bzw. an dem Stutzen erfolgen. Erfindungsgemäß ist ein Abstandshalter vorgesehen, der zwischen dem aus dem Stutzen herausragenden Ende des Anstechröhrchens und dem Auftragende des Stutzens angeordnet ist. Dieser Abstandshalter ist insbesondere als Federclips ausgebildet, der das Anstechröhrchen umgibt. Dieser Federclips kann seitlich vom Anstechröhrchen abgezogen werden, so dass dieses anschließend axial verschiebbar ist. Der Abstandshalter stützt sich zwischen einem Außenvorsprung am Anstechröhrchen und dem Austragende des Stutzens ab.

Sofern das Anstechröhrchen nicht direkt manuell sondern über ein Betätigungselement indirekt manuell bewegt wird, kann dieses Betätigungselement als Sicherung zum Schutze des Anstechröhrchens vor unbeabsichtigten Bewegungen aus der Rückzugsposition in die Vorschubposition genutzt werden. Das Betätigungselement ist zweckmäßigerweise nach Art eines auf dem Stutzen angeordneten Hülsenelements ausgebildet, das sich axial über den Stutzen verschieben lässt. Dieses Hülsenelement ist in zwei axialen Positionen, die der Rückzugsposition und der Vorschubposition des Anstechröhrchens entsprechen, am Stutzen bzw. an der Aufnahmekappe gegen unbeabsichtigte Axialbewegungen verriegelbar. Vorteilhafterweise ist das Hülsenelement als Schraubelement ausgebildet, das einen Innengewindeabschnitt aufweist, der mit einem Außengewindeabschnitt am Stutzen in Eingriff bringbar ist. Durch diese beiden Gewindeabschnitte lässt sich das Hülsenelement axial verschieben, um das Anstechröhrchen in den Folienschlauch hineinzutreiben. Sowohl das Hülsenelement als auch der Stutzen weisen beidseitig ihrer Gewindeabschnitte Bereiche auf, die frei von Gewinden sind. So lange die beiden Gewindeabschnitte nicht in Gewindeeingriff miteinander sind, führt eine Verdrehung des Hülsenelements nicht zu einer axialen Verschiebung. Darüber hinaus verhindern die beiden nicht in Gewindeeingriff miteinander stehenden Gewindeabschnitte eine lineare axiale Verschiebung des Hülsenelements. Damit ist dieses vor und nach dem Gewindeeingriff der beiden Gewindeabschnitte gegen ungewollte axiale Bewegungen gesichert.

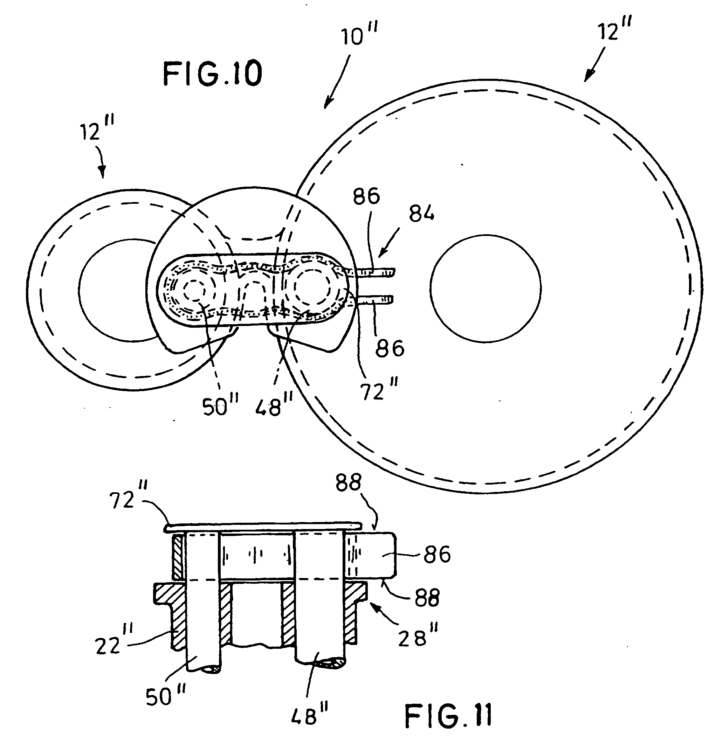

Nachfolgend werden anhand der Figuren diverse Vorrichtungen zum Öffnen eines eine pastöse Masse beinhaltenden Schlauchbeutels beschrieben, wobei es sich bei der in den Fign. 10 und 11 gezeigten Vorrichtung um eine erfindungsgemäße Ausführungsform handelt und die Beschreibung der übrigen Figuren dem besseren Verständnis der erfindungsgemäßen Ausführungsform dient. Im einzelnen zeigen:
- Fig. 1: eine Seitenansicht einer Austragvorrichtung für pastöse Zweikomponenten-Gemische (insbesondere Dental-Abformmassen mit Katalysator), wobei die Mischereinheit in ihrem kurz vor der Kupplung mit dem Vorratsbehältnis befindlichen Zustand dargestellt ist,
- Fig. 2: eine Draufsicht auf das vordere Ende des Vorratsbehältnisses, an dem die Mischereinheit befestigt wird, wobei sich die an diesem Ende des Vorratsbehältnisses angeordnete Haltehülse in ihrer Aufnahmedrehposition befindet,
- Fig. 3: eine Seitenansicht, teilweise geschnitten, der Austragvorrichtung mit angekuppelter Mischereinheit,
- Fig. 4: einen Schnitt entlang der Linie IV-IV der Fig. 3 mit in ihrer Verriegelungsdrehposition befindlicher Haltehülse,
- Fign. 5 bis 7: eine weitere Vorrichtung zum gleichzeitigen Öffnen zweier Schlauchbeutel, wobei die Vorrichtung in unterschiedlichen Betriebszuständen dargestellt ist,
- Fign. 8 und 9: eine dritte Öffnungsvorrichtung für zwei Schlauchbeutel ebenfalls in unterschiedlichen Betriebsstellungen und
- Fign. 10 und 11: eine erfindungsgemäße Abwandlung der Vorrichtung gemäß den Fign. 8 und 9.

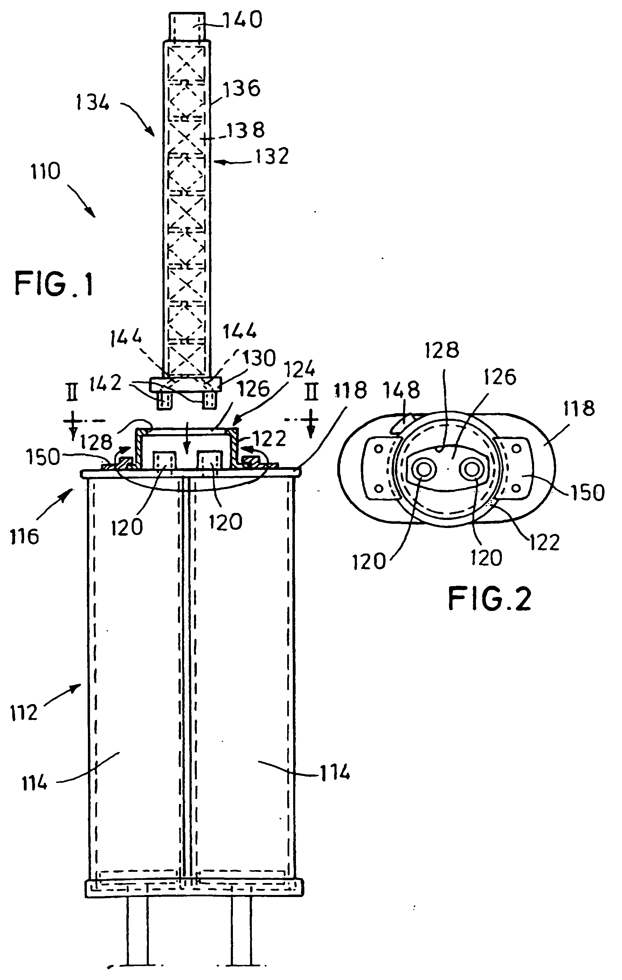

Fig. 1 zeigt teilweise geschnitten eine Seitenansicht einer Auftragvorrichtung 110 für pastöse Zweikomponenten-Gemische. Die Auftragvorrichtung 110 umfasst ein starres Vorratsbehältnis 112 mit zwei im wesentlichen zylindrischen Kammern 114 zur Aufnahme jeweils einer pastösen Komponente. Am vorderen Ende 116 weist das Vorratsbehältnis 112 eine Stirnwand 118 auf, von der zwei mit jeweils einer der Kammern 114 korrespondierende Auslassstutzen 120 abstehen. Um die Auslassstutzen 120 herum ist ein Aufnahmekragen oder eine Haltehülse 122 angeordnet, die drehbar an der Stirnwand 118 des Vorratsbehältnisses 112 gelagert ist. Die Haltehülse 122 weist an ihrem über die Auslassstutzen 120 vorstehenden und der Stirnwand 118 abgewandten vorderen Ende 124 eine Aussparung 126 in Form einer von einem Aussparungsrand 128 allseitig umschlossenen Öffnung auf.

In die Haltehülse 122 wird das Kupplungsende 130 einer Mischereinheit 132 eingeführt, die ein Mischergehäuse 134 mit einem rohrförmigen Abschnitt 136 aufweist. In dem rohrförmigen Abschnitt 136 befindet sich ein Mischerelement 138. Der rohrförmige Abschnitt 136 weist ein Auslassende 140 auf, während das Kupplungsende 130 zwei Einlassstutzen 142 mit sich von diesen aus bis zum Mischerelement 138 erstreckenden getrennten Kanälen 144 aufweist.

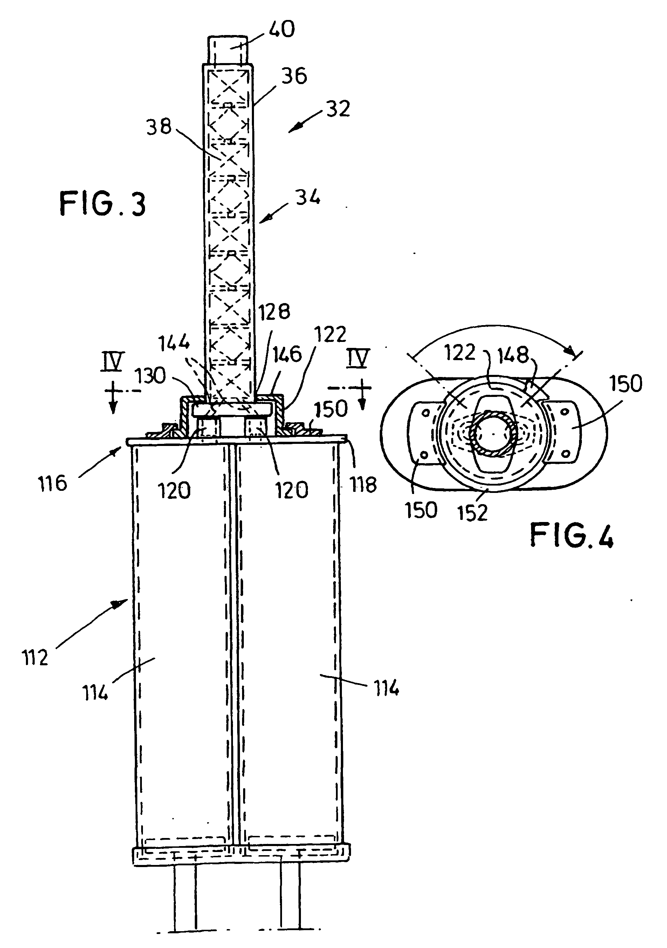

Wie insbesondere in der Draufsicht gemäß Fig. 2 zu erkennen ist, weist die Öffnung 126 im wesentlichen eine Ovalform auf. Korrespondierend zu dieser Öffnungsform ist das Kupplungsende 130 des Mischergehäuses 134 ausgebildet. Somit lässt sich die Mischereinheit132 bei Ausrichtung der Haltehülse 122 gemäß Fig. 2 mit dem Kupplungsende 130 durch die Öffnung 126 hindurchbewegen, bis die Einlassstutzen 142 von den Auslassstutzen 120 aufgenommen sind. Durch anschließendes Verdrehen übergreift der Öffnungsrand 128 der Haltehülse 122 die beiden diametral gegenüberliegenden und radial abstehenden Schulterflächen 146 im Übergangsbereich zwischen dem rohrförmigen Abschnitt 134 und dem flanschartigen Kupplungsende 130 der Mischereinheit 132. Diese Verriegelungsdrehposition ist in den Fign. 3 und 4 gezeigt. In dieser Verdrehposition der Haltehülse 122 übergreift diese also mit einem Teil ihres Öffnungsrandes 128 das Kupplungsende 130 der Mischereinheit 132 und hält damit die Mischereinheit 132 im mit dem Vorratsbehältnis 112 verbundenen Betriebszustand.

Als Einwegartikel braucht bei der hier beschriebenen Austragvorrichtung lediglich noch die Mischereinheit 132 ohne die Haltehülse 122 konzipiert zu sein. Dies reduziert das Volumen an Einwegmaterial für die Mischereinheit 132, was sich vorteilhaft bezüglich der Ökobilanz und darüber hinaus bezüglich der Herstellungskosten auswirkt.

In den Fign. 2 und 4 ist noch angedeutet, dass die Haltehülse 122 in ihren beiden in diesem Ausführungsbeispiel um 90° voneinander versetzten Drehendstellungen bezüglich jeweils einer weiteren Verdrehung gesichert ist. Dies wird durch ein radial abstehendes Anschlagelement 148 an der Haltehülse 122 realisiert, das gegen jeweils ein an der Stirnwand 118 angeordnetes Gegenelement 150 anschlägt. Die beiden Gegenelemente 150 sind diametral gegenüberliegend angeordnet und übergreifen einen Ringflansch 152 der Haltehülse 122, sorgen also neben ihrer Funktion als Drehbegrenzung auch für die drehbare Lagerung der Haltehülse 122 an dem Vorratsbehältnis 112.

Durch entsprechende Formgebung der Öffnung 126 der Haltehülse 122 ist es möglich, das Interface zwischen der Mischereinheit 132 und dem Vorratsbehältnis 112 zu kodieren, so dass sich die Mischereinheit 132 lediglich in einer bestimmten Ausrichtung der Mischereinheit 132 und der Haltehülse 122 aufsetzen lässt. Diese Kodierung kann aber auch durch zusätzliche zusammengreifende Vorsprungs- und Ausnehmungselemente an der Mischereinheit 132 und dem Vorratsbehältnis 112 realisiert sein. Z.B. könnten die Auslassstutzen 120 und damit auch die Einlassstutzen 142 unterschiedliche Durchmesser oder Formen aufweisen.

Das Mischer-Interface ist vorstehend in seiner Anwendung bei einem starren Vorratsbehältnis mit statischem Mischer beschrieben, lässt sich aber auch bei sogenannten dynamischen Mischern einsetzen, die über eine drehend angetriebene Mischerwelle verfügen. Ferner kann die Kupplung des Mischers auch bei einem Druckbehälter für in Schlauchbeuteln untergebrachtes pastöses Material realisiert werden. Derartige Systeme benötigen spezielle Öffnungsmechanismen, mit denen sich die Schlauchbeutel eröffnen lassen. Nachfolgend wird ein derartiges Schlauchbeutel-Eröffnungssystem beschrieben.

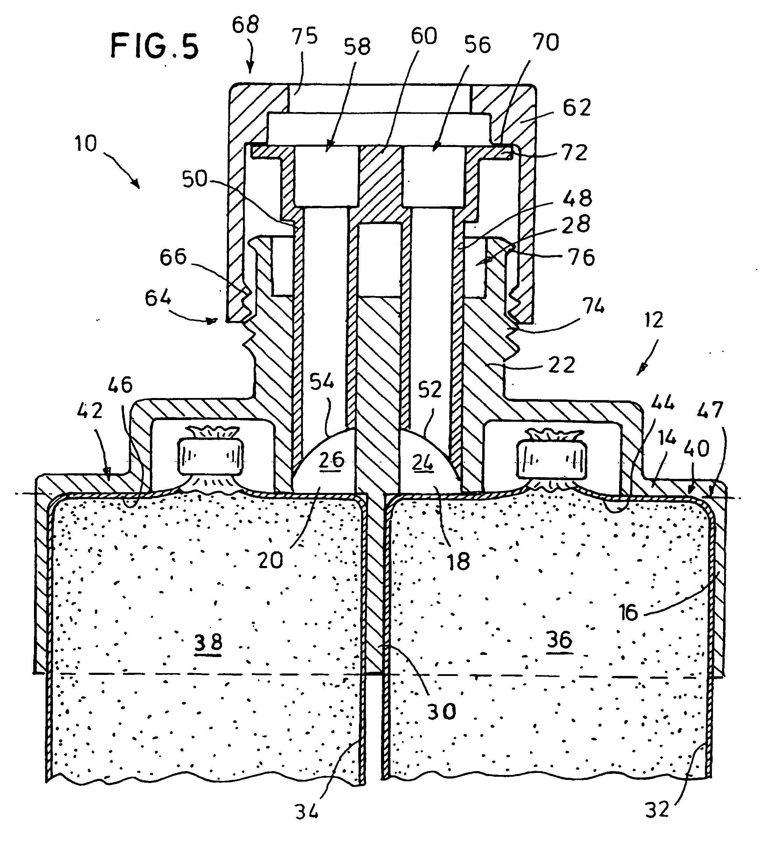

In den Fign. 5 bis 7 ist eine Vorrichtung 10 zum Öffnen zweier Schlauchbeutel dargestellt. Die Vorrichtung 10 weist eine Aufnahmekappe 12 auf, der mit einer Stirnwand 14 und einem von dieser abstehenden Rand 16 versehen ist. In der Stirnwand 14 befinden sich zwei Öffnungen 18,20, in deren Bereich von der Stirnwand 14 in zum Rand 16 entgegengesetzter Richtung ein Stutzen 22 absteht. In dem Stutzen 22 befinden sich zwei von den Öffnungen 18,20 aus sich erstreckende Kanäle 24,26, die bis zum der Stirnwand 14 abgewandten Austragende 28 des Stutzens 22 verlaufen. Die Stirnwand 14 weist zwischen den beiden Öffnungen 18,20 eine Trennwand 30 auf, die in Richtung des Randes 16 von der Stirnwand 14 absteht. Auf diese Weise entstehen zwei Aufnahmeräume für zwei Schlauchbeutel 32,34, die jeweils eine pastöse Masse 36,38 beinhalten. Die stirnseitigen Enden 40,42 der beiden Schlauchbeutel 32,34 sind von der Aufnahmekappe 12 bzw. dem Rand 16 und der Zwischenwand 30 umgeben, wobei die Stirnflächen 44,46 der Schlauchbeutel 32,34 entlang einer Anlageebene 47 an der Stirnwand 14 der Aufnahmekappe anliegen. Die Schlauchbeutel 32,34 können mit der Aufnahmekappe 12 fest verbunden sein, was beispielsweise durch Verklebung erfolgt.

In jedem Kanal 24,26 befindet sich ein Anstechröhrchen 48,50, das ein angeschrägtes und damit spitz zulaufendes Anstechende 52,54 aufweist. Die beiden Anstechröhrchen 48,50 sind axial verschiebbar in den Kanälen 24,26 angeordnet und stehen in ihrer Rückzugsposition gemäß Fig. 5 über das Austragende 28 des Stutzens 22 über. An ihren den Anstechenden 52,54 abgewandten Enden 56,58 sind die beiden Anstechröhrchen 48,50 untereinander verbunden, was bei 60 dargestellt ist. Aufgabe der Anstechröhrchen 48,50 ist es zum einen, durch Eindringen in die Stirnflächen 44,46 die Schlauchbeutel 32,34 zu öffnen, und zum anderen bei geöffneten Schlauchbeuteln 32,34 die pastösen Massen 36,38 zwecks Ausbringung derselben passieren zu lassen.

Auf dem Stutzen 22 befindet sich eine Schraubkappe 62, die als Betätigungselement zum axialen Verschieben der Anstechröhrchen 48,50 dient. Die Schraubkappe 62 ist im wesentlichen zylindrisch und weist an ihrem der Aufnahmekappe 12 zugewandten einen Ende 64 einen Innengewindeabschnitt 66 auf. An dem anderen Ende 68 ist die Schraubkappe 62 mit einer Innenschulter 70 versehen, die an einem umlaufenden Radialflansch der beiden Anstechröhrchen 48,50 anliegt. Zwischen der Innenschulter 70 und dem Innengewindeabschnitt 66 ist die Schraubkappe 62 an ihrer Innenseite glatt und vorsprungsfrei ausgebildet.

Im längs seiner axialen Erstreckung mittleren Teil weist der Stutzen 22 einen Außengewindeabschnitt 74 auf, der mit dem Innengewindeabschnitt 66 der Schraubkappe 62 in Gewindeeingriff bringbar ist. Oberhalb und unterhalb des Außengewindeabschnitts 74 des Stutzens 22 weist dieser glatte vorsprungsfreie Bereiche auf, deren Axialerstreckung gleich bzw. geringfügig größer als die Axialerstreckung des Innengewindeabschnitts 66 ist. An seinem der Aufnahmekappe 22 abgewandten vorderen Ende 28 ist der Stutzen 22 mit einem außenliegenden Sicherungsvorsprung 76 versehen.

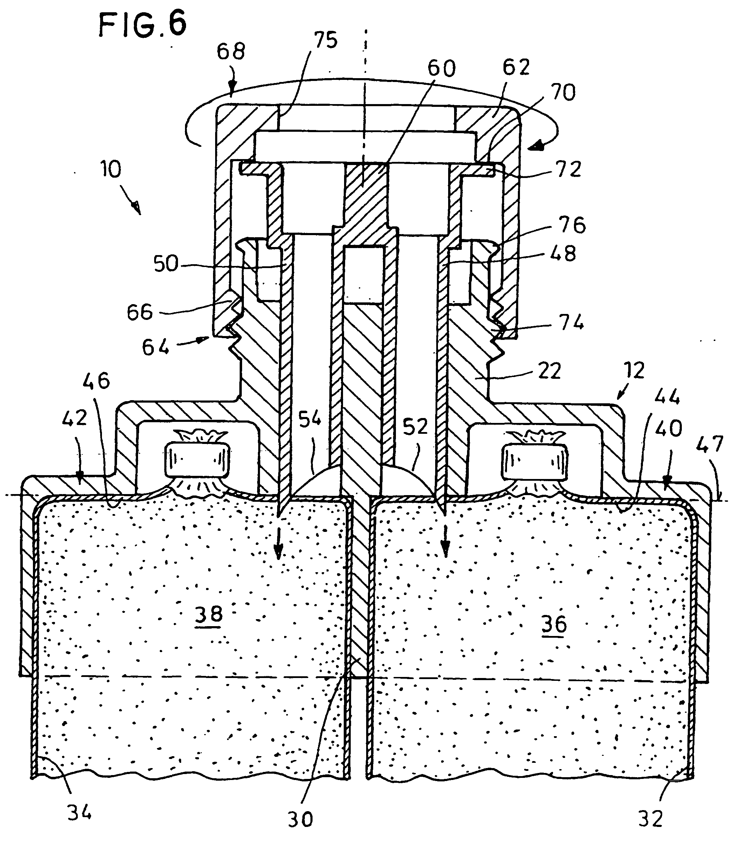

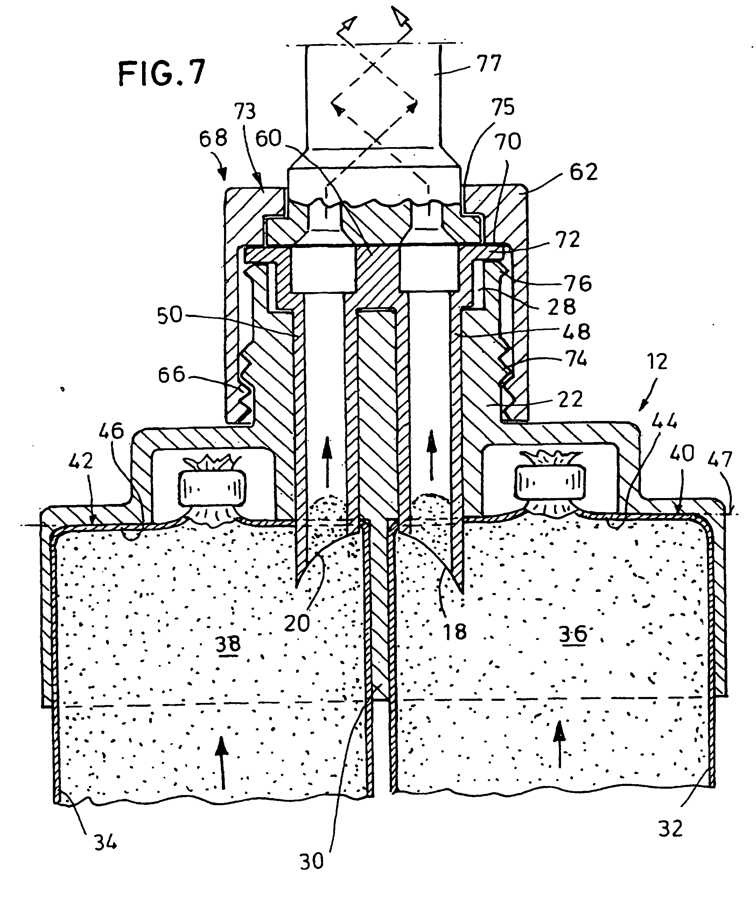

Die Schraubkappe 62 wird werksseitig über den Sicherungsvorsprung 76 auf den Stutzen 22 geschoben, bis sich der Innengewindeabschnitt 66 zwischen dem Sicherungsvorsprung 76 und dem Außengewindeabschnitt 74 des Stutzens 22 befindet (siehe Fig. 5). In dieser Situation befinden sich die Anstechdorne 48,50, die vor der Schraubkappe 62 in die Kanäle 24,26 eingesetzt worden sind, in ihrer Rückzugsposition, in der ihre Anstechspitzen 52,54 nicht über die Anlageebene 47 vorstehen. In dieser Rückzugsposition verbleiben die Anstechdorne 48,50 auch dann, wenn auf die Schraubkappe 62 in axialer Richtung eine Kraft ausgeübt wird, da die Innengewinde- und Außengewindeabschnitte 66,74 eine Bewegung der Kappe 62 verhindern. Erst durch Drehen der Schraubkappe 62 bei gleichzeitig aufgebrachtem geringen axialen Andruck bewegt sich die Schraubkappe 62 in axialer Richtung, da die beiden Gewindeabschnitte 66,74 in Gewindeeingriff miteinander kommen bzw. sind (siehe Fig. 6). Durch diese axiale Bewegung der Schraubkappe 62 werden die Anstechdorne 48,50 ebenfalls axial vorbewegt, so dass ihre Anstechspitzen 52,54 in die Stirnflächen 44,46 der Schlauchbeutel 32,34 einstechen. Die Anstechdorne 48,50 befinden sich vollständig in ihrer Vorschubposition, in der ihre Anstechspitzen 52,54 über die Anlageebene 47 überstehen, wenn die beiden Gewindeabschnitte 66,74 mit weiterer Verdrehung der Schraubkappe 62 wiederum außer Eingriff miteinander gebracht sind (siehe Fig. 7). In dieser Situation ist eine axiale Verschiebung der Schraubkappe 62 wiederum durch die sich blockierenden Gewindeabschnitte 66,74 verhindert, so dass die Anstechdorne 48,50 in ihrer Vorschubposition gesichert sind.

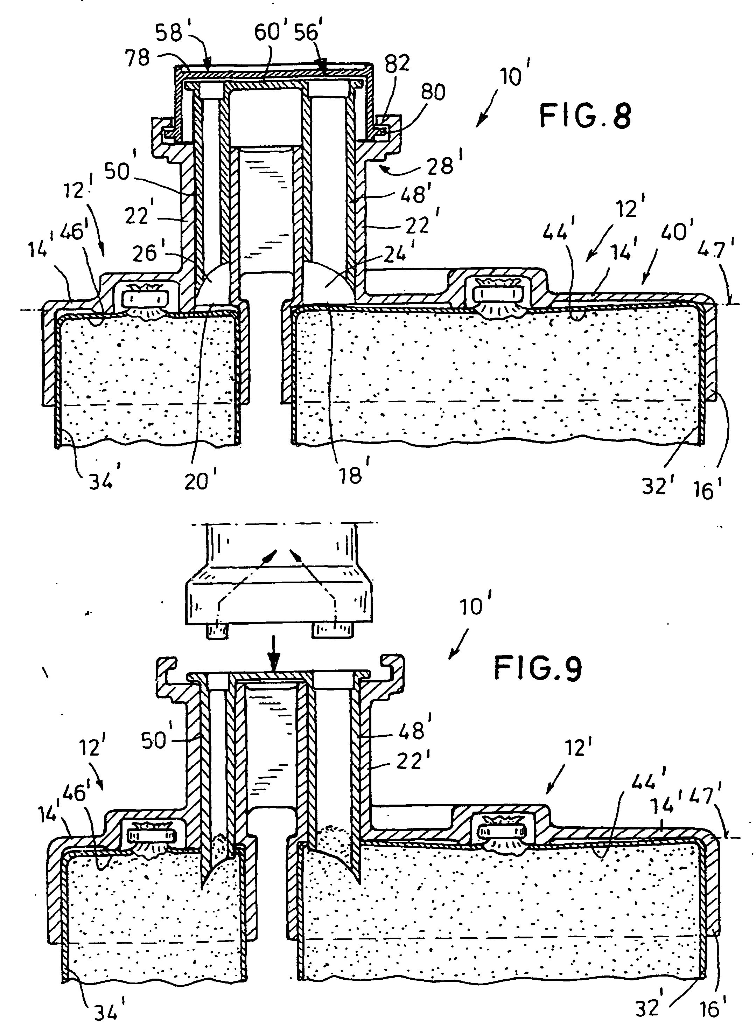

Nun kann, wie in Fig. 7 angedeutet, mit den Anstechdornen 48,50 ein dynamischer oder statischer Mischer 77 verbunden werden, in dem das durch die Anstechdorne 48,50 gelangende pastöse Material 36,38 miteinander vermischt wird. Der Mischer 77 ist an der Schraubkappe 62 gehalten, und zwar genauso, wie die Mischereinheit 132 mittels der Haltehülse 122 an dem Vorratsbehältnis 112 gemäß Fign. 1 bis 4 gehalten ist. Die Schraubkappe 62 hat also eine Doppelfunktion, indem sie ausgehend von Fig. 6 zunächst der Vorbewegung der Anstechdorne 48,50 bis in die Schlauchbeutel 32,34 hinein dient (Fign. 7 und 8), um dann durch entsprechende Drehpositionierung für die "passende Ausrichtung" ihrer Öffnung 75 relativ zum Kupplungsende 73 des Mischers 77 zu sorgen, so dass sich dieses Kupplungsende 73 von oben in die Schraubkappe 62 einführen lässt. Anschließend wird dann die Schraubkappe 62 verdreht, um die Fixierung des Mischers 77 nach Art eines Bajonett-Verschlusses, wie in Fign. 1 bis 4 näher beschrieben, zu ermöglichen. Diese Verdrehungen der Schraubkappe 62 erfolgen in der Position gemäß Fig. 7, in der die Schraubkappe 62 außer Gewindeeingriff mit dem Stutzen 22 steht.

Die Arretierung der Schraubkappe 62 in jeweils deren Aufnahmedrehposition und der Verriegelungsposition und die Begrenzung der Verdrehung, wie es im Zusammenhang mit der Haltehülse 122 gemäß dem Ausführungsbeispiel der Fign. 1 bis 4 beschrieben ist, lässt sich durch Verrastung der Schraubkappe 62 mit der Aufnahmekappe 12 realisieren. Da der axiale Abstand der Schraubkappe 62 von der Aufnahmekappe 12 beim Aufschrauben auf den Stutzen 22 zwecks Vorbewegung der Ansteichdorne 48,50 zu den Verhältnissen in der Position gemäß Fig. 7 unterschiedlich ist, kann die Verrastung und Bewegungsbegrenzung konstruktiv so ausgebildet sein, dass hierzu erforderliche Rastvorsprünge und -vertiefungen sowie Anschläge erst dann zusammenwirken, wenn die Gewindeabschnitte 66,74 gemäß Fig. 7 außer Eingriff sind.

Fign. 8 und 9 zeigen eine alternative Ausgestaltung der Öffnungsvorrichtung 10'. So weit die einzelnen Teile dieser Vorrichtung 10' derjenigen gemäß den Fign. 5 bis 6 entsprechen bzw. funktionsgleich mit diesen sind, sind sie mit den gleichen Bezugszeichen, jedoch einfach gestrichen, bezeichnet. Bei der Vorrichtung 10' ist für jeden Schlauchbeutel 32',34' eine separate Aufnahmekappe 12' mit einer Stirnwand 14' und einem umlaufenden abstehenden Rand 16' vorgesehen. Jede Aufnahmekappe 12' weist einen Stutzen 22' mit einem diesen durchziehenden Kanal 24' bzw. 26' auf. In den beiden Kanälen 24',26' befinden sich wiederum zwei Anstechröhrchen 48',50', die in der Rückzugsposition gemäß Fig. 8 über die Enden 28' der Stutzen 22' überstehen. Die Anstechröhrchen 48',50' sind an ihren den Aufnahmekappen 12' abgewandten Enden 56',58' miteinander bei 60' verbunden. Zur Sicherung der Anstechröhrchen 48',50' gegen unbeabsichtigte Bewegungen aus ihren Rückzugspositionen gemäß Fig. 8 weist die Vorrichtung 10' eine Schutzkappe 78 auf, die mit den Stutzen 22' lösbar verbunden ist, was in Fig. 8 durch kor-respondierende Übergreif- und Untergreifvorsprünge 80,82 an den Stutzen 22' bzw. der Kappe 78 realisiert ist. Durch Drehen der Kappe 78 lassen sich diese Vorsprünge 80,82 außer Eingriff miteinander bringen und damit die Kappe 78 abnehmen. Durch manuelles Drücken auf die Enden 56',58' bzw. die Verbindung 60' der beiden Anstechröhrchen 48',50' lassen sich diese axial in den Kanälen 24',26' bis über die Anlageebene 47' hinaus in die Schlauchbeutel 32',34' hinein bewegen (siehe Fig. 9). Anschließend wird ein Mischer auf die Anstechröhrchen 48',50' gesteckt, wobei der Mischer an den Stutzen 22' durch entsprechende Sicherungselemente arretiert ist.

In den Fign. 10 und 11 ist ein erfindungsgemäßes Ausführungsbeispiel einer Vorrichtung 10" gezeigt, bei der es sich um eine Alternative zur Vorrichtung 10' handelt. Der Unterschied zur Vorrichtung 10' besteht in der Sicherung der Anstechröhrchen 48",50" gegen unbeabsichtigte Bewegungen aus der Rückzugsposition in die Vorschubposition. Bei der Variante gemäß den Fign. 10 und 11 wird ein als Federclip ausgebildeter Abstandshalter 84 verwendet, der die aus den Enden 28" der Stutzen 22" herausragenden Anstechröhrchen 48",50" von außen umgibt und damit zwischen dem umlaufenden Außenflansch 72" der Anstechröhrchen 48",50" und dem Ende 28" der Stutzen 22" angeordnet ist (siehe Fig. 11). Der Clip 84 ist als zweischenkliger Bügel ausgebildet, dessen beide Bügel 86 an ihren einander gegenüberliegenden Längsrändern 88 einerseits am Flansch 72" und andererseits an den Enden 28" der Stutzen 22" anliegen. Durch seitliches Abziehen des Clip 84 werden die Anstechröhrchen 48",50" freigegeben, so dass sie dann durch Niederdrücken axial vorbewegt werden können.

## Patentansprüche

1. Vorrichtung zum Öffnen eines eine pastöse Masse beinhaltenden Schlauchbeutels mit
- einer Aufnahmekappe (14;14';14") zur Aufnahme eines eine Stirnfläche (44;46;44';46') aufweisenden stirnseitigen Endes (40;42; 40';42') des Schlauchbeutels (32;34;32';34), wobei die Aufnahmekappe (14; 14'; 14") eine eine Anlageebene (47;47') für die Stirnfläche (44;46;44';46') des Schlauchbeutels (32;34;32';34) bildende Stirnwand (14;14') und einen von dieser abstehenden Rand (16;16') aufweist,
- einer in der Stirnwand (14;14') angeordneten Öffnung (18;20;18';20'), die von einem von der Stirnwand (14;14') abstehenden Stutzen (22;22') umgeben ist, und
- einem Anstechröhrchen (48;50;48';50'), das axial verschiebbar in dem Stutzen (22;22') geführt ist,
- wobei das Anstechröhrchen (48;50;48';50') manuell aus einer Rückzugsposition, in der das Anstechröhrchen (48;50;48';50') nicht über die Anlageebene (47;47') vorsteht, in eine Vorschubposition verschiebbar ist, in der das Anstechröhrchen (48;50;48';50') über die Anlageebene (47;47') übersteht, und
- wobei das Anstechröhrchen (48;50;48';50') in seiner Rückzugsposition gegen unbeabsichtigte Bewegungen in Richtung auf die Vorschubposition durch einen entfernbaren Abstandshalter (84) gesichert in dem Stutzen (22;22') angeordnet ist,
**dadurch gekennzeichnet,**
- **dass** das Anstechröhrchen (48";50") an seinem der Stirnwand der Aufnahmekappe (12") abgewandten Ende einen Außenvorsprung (72") aufweist,
- **dass** der Abstandshalter (84) zwischen dem Außenvorsprung (72") und dem Austragende (28") des Stutzens (22") positionierbar ist und
- **dass** der Abstandshalter (84) auf das Anstechröhrchen (48"; 50") aufsteckbar und von diesem entfernbar ist.

2. Vorrichtung nach Anspruch 1, **dadurch gekennzeichnet, dass** das Anstechröhrchen (48;50;48';50') in seiner Vorschubposition gegen unbeabsichtigte Zurückbewegung in Richtung auf die Rückzugsposition gesichert in dem Stutzen (22;22') angeordnet ist.

3. Vorrichtung nach Anspruch 1 oder 2, **dadurch gekennzeichnet, dass** das Anstechröhrchen (48;50;48';50') in seiner Rückzugsposition über das der Stirnwand (14;14') abgewandte Austragende (28;28') des Stutzens (22;22') übersteht.

4. Vorrichtung nach einem der Ansprüche 1 bis 3, **dadurch gekennzeichnet, dass** in dem Aufnahmestutzen (22) zwei Anstechröhrchen (48,50) axial verschiebbar angeordnet sind.

## Claims

1. Device for opening a tubular bag containing a paste-like substance
- with a receiving cap (14; 14'; 14") for receiving an end side (40; 42; 40'; 42') of the tubular bag (32; 34; 32'; 34) having an end face (44; 46; 44';46'), whereby the receiving cap (14;14';14") has an end wall (14; 14') forming an abutment plane (47; 47') for the end face (44; 46; 44'; 46') of the tubular bag (32; 34; 32'; 34'), and an edge (16; 16') extending from the end face,
- an opening (18; 20; 18';20') formed in the end wall (14; 14') and surrounded by a stub (22; 22') extending from the end wall (14; 14') and
- a push-in tube (48; 50; 48';50'), which is axially displaceable in the stub (22; 22'),
- whereby the push-in tube (48; 50; 48', 50') can be displaced manually out of a retracted position, in which the push-in tube (48; 50; 48'; 50') does not extend beyond the abutment plane (47; 47'), into an advanced position, in which the push-in tube (48; 50; 48'; 50') extends beyond the abutment plane (47; 47'), and
- whereby the push-in tube (48; 50; 48'; 50') is arranged in its retracted position in the stub (22; 22') secured against any unintentional movements in the direction of the advanced position by a removable spacer (84),
**characterised in that**
- the push-in tube (48";50") at its end facing away from the front wall of the receiving cap (12") has an outer projection (72"),
- **in that** the spacer (84) can be positioned between the outer projection (72") and the discharge end (28") of the stub (22") and
- **in that** the spacer (84) can be fitted onto the push-in tube (48";50") and can be removed from the latter.

2. Device according to claim 1, **characterised in that** the push-in tube (48; 50; 48';50') in its advance position is arranged in the stub (22; 22') so as to be secured against unintentional return movement in the direction of the retracted position.

3. Device according to claim 1 or 2, **characterised in that** the push-in tube (48; 50; 48'; 50') in its retracted position projects beyond the discharge end (28; 28') of the stub (22; 22') facing away from the end wall (14; 14').

4. Device according to one of claims 1 to 3, **characterised in that** two push-in tubes (48, 50) are arranged axially displaceably in the holding stub (22).

## Revendications

1. Dispositif pour ouvrir un sachet tubulaire contenant une masse pâteuse, avec
- un capuchon récepteur (14 ; 14' ; 14") pour recevoir une extrémité frontale (40 ; 42 ; 40', 42') du sachet tubulaire (32 ; 34 ; 32' ; 34) équipée d'une surface frontale (44, 46 ; 44' ; 46'), le capuchon récepteur (14 ; 14' ; 14") étant muni d'une paroi frontale (14 ; 14') formant un plan d'appui (47 ; 47') pour la face frontale (44 ; 46 ; 44' ; 46') du sachet tubulaire (14 ; 14' ; 14"), et d'un bord (16 ; 16') s'en éloignant,
- une ouverture (18; 20; 18'; 20') disposée dans la paroi frontale (14 ; 14') et entourée par une tubulure (22 ; 22') qui s'éloigne de la paroi frontale (14 ; 14'), et
- d'un tube de perçage (48 ; 50 ; 48' ; 50') qui est guidé dans la tubulure (22 ; 22') de manière à pouvoir coulisser axialement,
- le tube de perçage (48 ; 50 ; 48' ;50') pouvant être déplacé manuellement d'une position reculée dans laquelle le tube de perçage (48 ; 50 ; 48' ; 50') ne dépasse pas au-delà du plan d'appui (47 ; 47'), dans une position avancée dans laquelle le tube de perçage (48 ; 50 ; 48' ; 50') dépasse au-delà du plan d'appui (47 ; 47'), et
- le tube de perçage (48 ; 50 ; 48' ; 50') étant disposé, en position reculée, dans la tubulure (22, 22') sécurisé contre un mouvement involontaire en direction de la position avancée par un écarteur (84) pouvant être enlevé,
**caractérisé**
- **en ce que** le tube de perçage (48" ; 50") est muni à son extrémité opposée à la paroi frontale du capuchon récepteur (12") d'une partie en saillie vers l'extérieur (72"),
- **en ce que** l'écarteur (84) peut être positionné entre la partie en saillie vers l'extérieur (72") et l'extrémité de sortie de la tubulure (22"), et
- **en ce que** l'écarteur (84) peut être monté sur le tube de perçage (48" ; 50") et en être enlevé.

2. Dispositif selon la revendication 1, **caractérisé en ce que** le tube de perçage (48 ; 50 ; 48' ; 50') est disposé, en position avancée, dans la tubulure (22 ; 22') sécurisé contre un mouvement de recul involontaire en direction de la position reculée.

3. Dispositif selon la revendication 1 ou 2, **caractérisé en ce que** le tube de perçage (48 ; 50 ; 48' ; 50'), en position reculée, dépasse au-delà de l'extrémité de sortie (28 ; 28') de la tubulure (22, 22') opposée à la paroi frontale (14 ; 14').

4. Dispositif selon l'une des revendications 1 à 3, **caractérisé en ce que** deux tubes de perçage (48 ; 50) pouvant coulisser axialement sont disposés dans la tubulure réceptrice (22).
